# EUROPÄISCHE PATENTSCHRIFT

(11) **EP 4 158 215 B1**
(45) Veröffentlichungstag und Bekanntmachung des Hinweises auf die Patenterteilung: **10.04.2024**
(21) Anmeldenummer: 21707156.2
(22) Anmeldetag: 11.02.2021
(51) Int. Cl.: F16D 3/06, F16D 3/10, F16D 3/14, F16D 7/00, F16D 7/02

(54) **AUSGLEICHSKUPPLUNG**
COMPENSATING COUPLING
ACCOUPLEMENT DE COMPENSATION

(30) Priorität: 26.05.2020 DE 102020114017
(43) Veröffentlichungstag der Anmeldung: 05.04.2023
(73) Patentinhaber: Schaeffler Technologies AG & Co. KG, 91074 Herzogenaurach (DE)
(72) Erfinder: HEINISCH, Andreas, 97437 Sailershausen (DE); WEISSENBERGER, Patrick, 97273 Kürnach (DE); WETTERICH, Matthias, 97714 Rottershausen (DE)
(86) Internationale Anmeldenummer: PCT/DE2021/100134
(87) Internationale Veröffentlichungsnummer: WO 2021/239171

(56) Entgegenhaltungen:
- EP-A1- 2 686 557
- WO-A1-2005/057038
- JP-A- H04 194 417
- US-A- 2 734 359
- US-A1- 2006 276 246

## Beschreibung

Die Erfindung betrifft eine zum Ausgleich eines Radialversatzes zwischen zwei rotierbaren Elementen, insbesondere Wellen, vorgesehene Ausgleichskupplung nach dem Oberbegriff des Anspruchs 1.

Eine derartige, als Ausgleichskupplung aufgebaute Wellenkupplung ist beispielsweise aus der DE 10 2006 043 897 A1 bekannt. Die bekannte Wellenkupplung ist zur Ankopplung einer Geberwelle an einen Elektromotor vorgesehen. Ein Drehmomentübertragungselement ist derart gestaltet und zwischen der Motorwelle des Elektromotors und der Geberwelle angeordnet, dass sowohl Radial- und Axialversätze als auch Winkelversätze von Motor- und Geberwelle ausgleichbar sind.

Eine weitere gattungsgemäße Ausgleichskupplung ist in der DE 1 286 830 A offenbart. In diesem Dokument ist ein zwischen zwei eine Antriebswelle und eine Abtriebswelle geschaltetes Drehmomentübertragungselement als Schwebeglied bezeichnet. Das Schwebeglied weist zwei zueinander senkrecht ausgerichtete Führungsnuten auf, welche den beiden Wellen zugewandt sind.

Die DE 10 2017 010 096 A1 beschreibt einen Werkzeughalter mit elastischer Ausgleichskupplung. Hierbei wirkt ein elastisches Bindeglied mit einem äußeren Kupplungsteil und einem inneren Kupplungsteil der Ausgleichskupplung zusammen.

Aus der DE 37 06 135 A1 ist eine drehstarre Ausgleichskupplung mit Axialdämpfer bekannt, welche insbesondere für einen Einspritzpumpenantrieb konzipiert ist. Die Ausgleichskupplung umfasst zwei Kupplungshälften sowie eine dazwischen angeordnete Hohlwelle, die beidseitig über Membranlamellen jeweils an eine der Kupplungshälften angebunden ist.

Die DE 1 284 704 A offenbart eine Ausgleichskupplung, die zugleich als Rutschkupplung verwendbar sein soll. Die Ausgleichskupplung ist zur Verbindung zweier Wellenenden vorgesehen, wobei das eine Wellenende mit einer Muffe und das andere Wellenende mit Kupplungsinnenteilen verbunden ist, die in der Muffe gehalten sind.

Aus der EP 1 288 515 B1 ist eine Gelenkwellenkupplung bekannt, die eine teleskopische Wellenanordnung umfasst. Komponenten der teleskopischen Wellenanordnung sind zwei Wellen, welche entlang einer Längsachse axial gleitend gegeneinander verschiebbar sind.

Als Ausgleichkupplungen, welche zum Übertragen rotatorischer Leistung geeignet sind, kommen prinzipiell auch Metallbalgkupplungen in Betracht. In diesem Zusammenhang wird beispielhaft auf die DE 10 2011 118 989 A1 hingewiesen, die eine Metallbalgkupplung beschreibt, bei welcher ein Balg aus Stahl mit Anbaunaben aus Aluminium verschweißt ist.

Die US 2 734 359 A1 beschreibt eine Kupplung zur Übertragung von Leistung auf eine angetriebene hohle Welle, durch welche sich axial eine torsionselastische Spindel erstreckt. Zum Herstellen einer Antriebsverbindung ist eine Keilverzahnung an einem Ende der Spindel in Eingriff mit einer Keilverzahnung im Inneren der Welle, wobei die ineinandergreifenden Zähne einen relativ großen Winkelabstand dazwischen aufweisen.

Die WO 2005 / 057 038 A1 beschreibt eine Sicherheitskupplung gegen Überlast mit einem mit einer Verzahnung ausgebildeten Spindelabschnitt, der in einer Drehschiebehülse axial verschiebbar aufgenommen ist.

Die JP H04 194 417 A offenbart eine einfach einbaubare Kupplung mit einer Drehbegrenzungsfunktion.

Die EP 2 686 557 A0 entsprechend der WO 2012 / 122 972 A1 beschreibt ein Gelenk zur Übertragung von Drehmomenten und Axialkräften in Verbindung mit einer exzentrischen Rotationsbewegung.

Die US 2006 / 276 246 A1 offenbart eine Vorrichtung mit einem Kraftbegrenzer

Der Erfindung liegt die Aufgabe zugrunde, eine gegenüber dem genannten Stand der Technik weiterentwickelte, montagetechnisch vorteilhafte Ausgleichskupplung anzugeben, welche zumindest einen Radialversatz zwischen einer antreibenden Welle und einem abtriebsseitigen Element ausgleicht und besonders für hohe Drehzahlen, wie sie beispielsweise in Spindellager-Prüfständen auftreten, geeignet ist.

Diese Aufgabe wird erfindungsgemäß gelöst durch eine Ausgleichskupplung mit den Merkmalen des Anspruchs 1. Die Ausgleichskupplung ist zum Ausgleich eines Radialversatzes, das heißt lateralen Versatzes, zwischen zwei rotierenden Elementen, insbesondere Wellen, geeignet und umfasst zwei mit den rotierbaren Elementen zu verbindende äußere Kupplungsteile, nämlich ein antriebsseitiges Kupplungsteil und ein abtriebsseitiges Kupplungsteil, sowie ein mittleres Kupplungsteil, welches gegenüber den äußeren Kupplungsteilen jeweils begrenzt beweglich ist, wobei eine bezüglich Torsionsbelastungen formschlüssige Zusammenwirkung zwischen dem mittleren Kupplungsteil und den äußeren Kupplungsteilen gegeben ist. Das mittlere Kupplungsteil ist aus einem als Dämpfungselement ausgebildeten Rohrstück sowie zwei an dem Rohrstück befestigten, jeweils zum zentrierten Zusammenstecken mittels Kugelkopfzentrierung mit einem der äußeren Kupplungsteile vorgesehenen Rohrabschlussstücken gebildet.

Die Ausbildung der Verbindungen zwischen dem mittleren Kupplungsteil und den äußeren Kupplungsteilen als zueinander zentrierte Steckverbindungen ist in verschiedener Hinsicht vorteilhaft:
Zum einen ist hierdurch eine sehr einfache, werkzeuglose Montage und Demontage der Ausgleichskupplung möglich. Zum anderen können die drei Kupplungsteile vor dem Zusammenbau einzeln ausgewuchtet werden, wobei sich durch den Zusammenbau keine neuen Unwuchten ergeben. Die rohrförmige Gestalt des mittleren Kupplungsteils ermöglicht zudem eine geringe Gesamtmasse sowie ein geringes Trägheitsmoment der Ausgleichskupplung. Insgesamt ist die Ausgleichskupplung damit als Leichtbaukupplung ausgebildet, deren Schwingungs-Übertragungsfunktion einen hohen Dämpfungsanteil aufweist.

Von einer Rohrform des mittleren Kupplungsteils wird auch dann gesprochen, wenn das über dieses Kupplungsteil übertragene Drehmoment hauptsächlich über einen rohrförmigen Außenbereich läuft, wogegen der Innenbereich des Kupplungsteils mit einem Material, insbesondere Schaum, ausgefüllt sein kann, welcher zwar nicht wesentlich zur Drehmomentübertragung beiträgt, jedoch eine Rolle hinsichtlich der mechanischen Dämpfung spielt. Unabhängig von der detaillierten Gestaltung des als Rohrstück ausgebildeten Dämpfungselements der Leichtbaukupplung spielen parasitäre Unwuchtkräfte bei deren Betrieb praktisch keine Rolle.

Die Steckverbindungen, welche zwischen dem mittleren Kupplungsteil und den äußeren Kupplungsteilen hergestellt sind, sind frei von Schnapp- oder Klemmmechanismen gestaltbar. In typischer Einbausituation hat das mittlere, rohrförmige Kupplungsteil damit einen Freiheitsgrad in axialer Richtung. Die Ausgleichskupplung ist damit nicht nur in der Lage, einen lateralen Achsversatz auszugleichen, sondern auch zum Ausgleich eines axialen Versatzes geeignet. Die äußeren Kupplungsteile können entweder fest mit den rotierenden Elementen, insbesondere Wellen, verbunden oder als integrale Bestandteile solcher Elemente ausgebildet sein.

Gemäß einer vorteilhaften Weiterbildung ist mindestens eine der Verbindungen zwischen Rohrstück und Rohrabschlussstück als Überlastkupplung ausgebildet. Insbesondere sind beide Verbindungen zwischen Rohrstück und Rohrabschlussstück als Überlastkupplungen ausgebildet, wobei deren Belastbarkeit durch einen zwischen das Rohrstück und die Rohrabschlussstücke eingebrachten Klebstoff, beispielsweise einen Epoxidharzkleber, bestimmt ist.

Die mit Hilfe eines Klebstoffs hergestellte Überlastkupplung ist - im Gegensatz zu rastenden Überlastkupplungen - als freischaltende Überlastkupplung ausgeführt. Prinzipiell sind Überlastkupplungen, welche eine Klebeverbindung umfassen, zum Beispiel aus der EP 3 001 062 B1 bekannt.

Das Auslösen der Überlastkupplung oder einer der Überlastkupplungen ist nicht mit der Entstehung nennenswerter Unwuchten verbunden. Auch bei sehr hohen Drehzahlen werden somit durch eine Auslösung der Überlastkupplung keine Lastspitzen in die zunächst drehfest miteinander gekoppelten Wellen eingeleitet.

Das als zentrales Element des mittleren Kupplungsteils vorgesehene, dämpfend wirkende Rohrstück ist beispielsweise aus einem faserverstärkten Kunststoff, insbesondere CFK, das heißt kohlenstofffaserverstärktem Kunststoff, gefertigt. Ein solches Rohrstück aus einem nicht metallischen Material zeichnet sich, auch zusammen mit den durch Klebeverbindungen hergestellten Überlastkupplungen, durch eine hohe Torsionssteifigkeit aus. Zudem wirkt das Rohrstück aus faserverstärktem Kunststoff als elektrischer Isolator und eignet sich damit auch für Anwendungen, insbesondere Prüfstandsanwendungen, bei denen induzierte Motorströme auftreten. Auch eine thermische Entkopplung zwischen den mechanisch miteinander gekoppelten Wellen ist damit realisiert.

Die Zentrierung zwischen dem mittleren Kupplungsteil und den beiden äußeren Kupplungsteilen ist erfindungsgemäß mit Hilfe von zwei Kugelköpfen hergestellt. Hierbei können die Kugelköpfe Teile der äußeren Kupplungsteile oder Teile der Rohrabschlussstücke und damit des mittleren Kupplungsteils sein. Ebenso ist es möglich, dass lediglich eines der äußeren Kupplungsteile einen Kugelkopf aufweist. In diesem Fall weist auch das mittlere Kupplungsteil genau einen Kugelkopf auf. In allen Fällen wird ein Drehmoment jeweils in derjenigen Ebene übertragen, in welcher auch die Zentrierung mit Hilfe des Kugelkopfes hergestellt ist. Unabhängig davon, welchen Kupplungsteilen die Kugelköpfe zuzurechnen sind, entstehen bei lateralem sowie axialem Achsversatz durch die Ausgleichskupplung höchstens geringe Rückstellkräfte.

Eine Drehmomentübertragung im Bereich eines Kugelkopfes ist erfindungsgemäß in einer ersten Ausführungsform möglich, indem im Kugelkopf ein Stift gehalten ist, welcher in eine Nut in einem anderen Kupplungsteil eingreift. Alternativ dazu kann erfindungsgemäß in einer zweiten Ausführungsform eine drehmomentübertragende Verbindung zwischen einem Kugelkopf und dem damit gekoppelten Kupplungsteil mit Hilfe von Verzahnungen des Kugelkopfes sowie des genannten Kupplungsteils hergestellt sein.

In allen Fällen ist der Kugelkopf in eine entsprechend dimensionierte Öffnung des anderen Kupplungsteils eingesteckt. Optional schließt an den Kugelkopf ein Verlängerungsabschnitt an. welcher sich unter Zwischenschaltung mindestens eines elastischen Ringes an einer Innenumfangsfläche eines der Kupplungsteile abstützt. Insbesondere ist der Verlängerungsabschnitt von einer Mehrzahl an elastischen Ringen, beispielsweise zwei Ringen, umgeben. Unabhängig von der Anzahl der Ringe ermöglichen diese eine Vorzentrierung desjenigen Kupplungsteils, welches den Kugelkopf aufweist, in dem zugehörigen weiteren Kupplungsteil. Innerhalb der zusammengebauten Ausgleichskupplung übernehmen die elastischen Ringe zusätzlich zu dem Rohrstück eine Dämpfungsfunktion.

Die Ausgleichskupplung ist insbesondere in Prüfständen zur Prüfung von Hochgeschwindigkeitslagern, beispielsweise axial belasteten Spindellagern, geeignet. Zum technischen Hintergrund wird beispielhaft auf die Dokumente DE 10 2006 011 978 A1 und DE 10 2009 050 153 A1 hingewiesen.

Nachfolgend werden zwei Ausführungsbeispiele der Erfindung anhand einer Zeichnung näher erläutert. Hierin zeigen:
- Fig. 1: ein erstes Ausführungsbeispiel einer Ausgleichskupplung,
- Fig. 2: ein zweites Ausführungsbeispiel einer Ausgleichskupplung.

Die folgenden Erläuterungen beziehen sich, soweit nicht anders angegeben, auf beide Ausführungsbeispiele. Einander entsprechende oder prinzipiell gleichwirkende Teile sind in allen Figuren mit den gleichen Bezugszeichen gekennzeichnet.

Eine insgesamt mit dem Bezugszeichen 1 gekennzeichnete Ausgleichskupplung ist zur Verwendung in einem Prüfstand für Spindellager vorgesehen. Es handelt sich um eine High-Speed-Anwendung, wobei die Ausgleichskupplung 1 unterkritisch betrieben wird. Mit Hilfe der Ausgleichskupplung 1 werden Spindellager mit einem Drehzahlindex von bis zu 4.000.000 mmrpm getestet. Die Ausgleichskupplung 1 ist damit Teil eines mit hoher Drehzahl betriebenen Mehrwellensystems.

Die Ausgleichskupplung 1 umfasst zwei äußere Kupplungsteile 2, 3, nämlich ein antriebsseitiges Kupplungsteil 2 und ein abtriebsseitiges Kupplungsteil 3, sowie ein die äußeren Kupplungsteile 2, 3 verbindendes mittleres Kupplungsteil 4, welches als Kupplungszwischenwelle gestaltet ist. Insgesamt ist die Ausgleichskupplung 1 in der Lage, sowohl einen lateralen als auch einen axialen Versatz zwischen den äußeren Kupplungsteilen 2, 3 auszugleichen. Die äußeren Kupplungsteile 2, 3 sind mit Wellen oder sonstigen rotierenden Elementen zu verbinden. Alternativ können die Kupplungsteile 2, 3 als integrale Bestandteile solcher Elemente, das heißt eines antreibenden Elementes beziehungsweise eines abtriebsseitigen Elementes, ausgebildet sein.

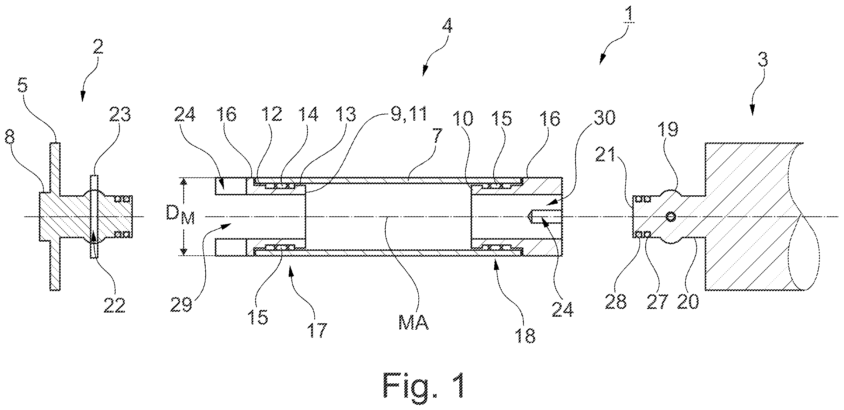

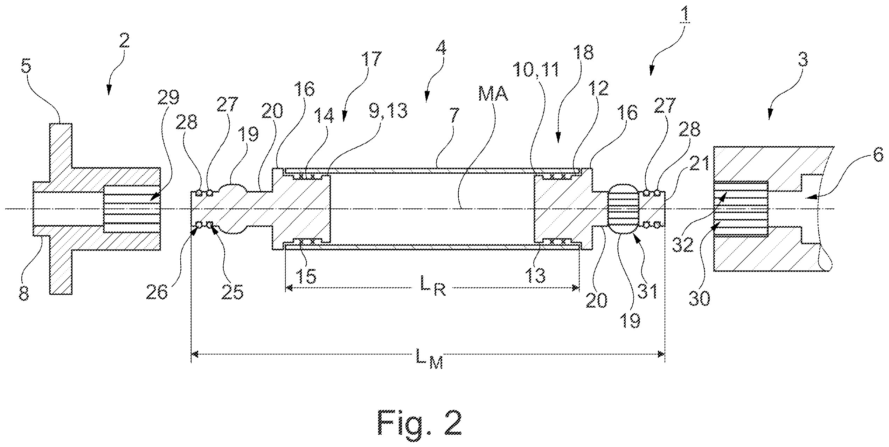

Das antriebsseitige Kupplungsteil 2 weist in den Ausführungsbeispielen einen Flansch 5 auf, welcher an einem antreibenden Element zu befestigen ist. Ferner ist am antriebsseitigen Kupplungsteil 2 ein Schaft 8 erkennbar, welcher zur Zentrierung des antriebsseitigen Kupplungsteils 2 am antreibenden Element nutzbar ist. Was das abtriebsseitige Kupplungsteil 3 betrifft, ist in Figur 2 eine Anschlusskontur 6 erkennbar, die zur Verbindung mit einer abtriebsseitigen Welle nutzbar ist. Im Ausführungsbeispiel nach Figur 1 ist das abtriebsseitige Kupplungsteil 3 nur teilweise dargestellt.

Die Kupplungszwischenwelle 4, welche die äußeren Kupplungsteile 2, 3 in nachstehend noch näher erläuterter Weise formschlüssig miteinander verbindet, weist in beiden Ausführungsbeispielen ein Rohrstück 7 auf, welches als Dämpfungselement der Ausgleichskupplung 1 fungiert. Das Rohrstück 7 ist als CFK-Rohr ausgebildet, welches mit ultrahochmoduligen Kohlenstofffasern gewickelt ist. Zusätzlich zu seiner mechanisch dämpfenden Funktion stellt das Rohrstück 7 auch ein Element zur thermischen Entkopplung sowie zur elektrischen Isolation dar. In den Anordnungen nach den Figuren 1 und 2 fällt die mit MA bezeichnete Mittelachse des Rohrstücks 7 und damit des gesamten mittleren Kupplungsteils 4 mit den Mittelachsen der äußeren Kupplungsteile 2, 3 zusammen. Der mit D_{M} bezeichnete Durchmesser des mittleren Kupplungsteils 4 ist mit dem Durchmesser des Rohrstücks 7 identisch. L_{M} bezeichnet die Gesamtlänge des mittleren Kupplungsteils 4.

Zusätzlich zum Rohrstück 7 sind zwei Rohrabschlussstücke 9, 10, bei welchen es sich um Metallteile handelt, dem mittleren Kupplungsteil 4 zuzurechnen. Durch jedes Rohrabschlussstück 9, 10 ist ein Einsatzstück 11 gebildet, welches im Rohrstück 7 gehalten ist. Die Einsatzstücke 11 weisen jeweils einen ersten ringförmigen Verbindungsabschnitt 12 und einen hiervon parallel beabstandeten zweiten ringförmigen Verbindungsabschnitt 13 auf. Zwischen den ringförmigen Verbindungsabschnitten 12, 13 ist ein Zwischenabschnitt 14 mit vergleichsweise geringem Durchmesser gebildet. Der Ringraum zwischen dem Zwischenabschnitt 14 und der Innenumfangsfläche des Rohrstücks 7 ist mit einem Klebstoff 15 befüllt, durch welchen eine Überlastkupplung 17, 18 gebildet ist. An die beiden Enden des Rohrstücks 7 grenzt jeweils ein stirnseitiger Anlageabschnitt 16 des Einsatzstückes 11.

Das mittlere Kupplungsteil 4 ist gegenüber den äußeren Kupplungsteilen 2, 3 jeweils mit Hilfe eines Kugelkopfes 19, welcher allgemein auch als sphärischer Abschnitt bezeichnet, zentriert, so dass zweifach eine Kugelkopfzentrierung gegeben ist. An den sphärischen Abschnitt 19 schließt, in Längsrichtung der Mittelachse MA betrachtet, einerseits ein Hals 20 und andererseits ein Verlängerungsabschnitt 21 an.

Im Ausführungsbeispiel nach Figur 1 sind die Kugelköpfe 19 Teile der äußeren Kupplungsteile 2, 3. Ein Stift 23, welcher ein drehmomentübertragendes Element darstellt, ist durch eine Bohrung 22 gesteckt, welche den Kugelkopf 19 mittig durchzieht und die Mittelachse MA rechtwinklig schneidet. Der Stift 23 greift in eine Längsnut 24 ein, welche sich im Rohrabschlussstück 9, 10 befindet. Die Stifte 23 der beiden äußeren Kupplungsteile 2, 3 sind, wie an sich von Oldham-Kupplungen her bekannt, um 90° gegeneinander verdreht. Jedoch ist das mittlere Kupplungsteil 4, anders als bei üblichen Oldham-Kupplungen, gegenüber den äußeren Kupplungsteilen 2, 3 nicht verschiebbar, sondern ausschließlich etwas kippbar.

Die Zentrierung des mittleren Kupplungsteils 4 gegenüber den äußeren Kupplungsteilen 2, 3 mit Hilfe zweier Kugelköpfe 19 ist auch im Ausführungsbeispiel nach Figur 2 gegeben. In diesem Fall weisen die Kugelköpfe 19 Außenverzahnungen 31 auf, welche formschlüssig, die Übertragung eines Drehmoments ermöglichend, jeweils in eine Innenverzahnung 32 eingreifen. Die Innenverzahnungen 32 sind in Bohrungen 29, 30 der äußeren Kupplungsteile 2, 3 ausgebildet, während die Kugelköpfe 19 als integrale Bestandteile der Rohrabschlussstücke 9, 10 an die Einsatzstücke 11 angeformt sind.

In beiden Ausführungsbeispielen befinden sich im Verlängerungsabschnitt 21 zwei Ringnuten 25, 26, in die jeweils ein O-Ring 27, 28 eingelegt ist. Die O-Ringe 27, 28, das heißt dämpfenden Ringe, stellen ein Mittel zur Vorzentrierung beim Zusammenbau der Ausgleichskupplung 1 dar. Zudem fungieren die O-Ringe 27, 28 als auch in Axialrichtung wirksame Dämpfungselemente beim Betrieb der Ausgleichskupplung 1.

Der Zusammenbau der Ausgleichskupplung 1 erfolgt durch simples Zusammenstecken der Kupplungsteile 2, 3, 4. In analoger Weise ist eine Demontage der Ausgleichskupplung 1 möglich, indem die Kupplungsteile 2, 3, 4 auseinandergezogen werden, wobei eine Zugänglichkeit der Ausgleichskupplung 1 von einer Seite, das heißt entweder vom antriebsseitigen Kupplungsteil 2 aus oder vom abtriebsseitigen Kupplungsteil 3 aus, ausreichend ist.

### Bezugszeichenliste

- 1: Ausgleichskupplung
- 2: äußeres Kupplungsteil, antriebsseitig
- 3: äußeres Kupplungsteil, abtriebsseitig
- 4: mittleres Kupplungsteil, Kupplungszwischenwelle
- 5: Flansch
- 6: Anschlusskontur
- 7: Rohrstück, Dämpfungselement
- 8: Schaft am antriebsseitigen Kupplungsteil
- 9: Rohrabschlussstück, antriebsseitige Buchse
- 10: Rohrabschlussstück, abtriebsseitige Buchse
- 11: Einsatzstück
- 12: erster ringförmiger Verbindungsabschnitt
- 13: zweiter ringförmiger Verbindungsabschnitt
- 14: Zwischenabschnitt
- 15: Klebstoff
- 16: stirnseitiger Anlageabschnitt
- 17: Überlastkupplung
- 18: Überlastkupplung
- 19: sphärischer Abschnitt, Kugelkopf
- 20: Hals
- 21: Verlängerungsabschnitt
- 22: Bohrung
- 23: Stift
- 24: Nut, Längsnut
- 25: Ringnut
- 26: Ringnut
- 27: O-Ring
- 28: O-Ring
- 29: Bohrung
- 30: Bohrung
- 31: Außenverzahnung
- 32: Innenverzahnung
- D_{M}: Durchmesser des mittleren Kupplungsteils
- L_{M}: Länge des mittleren Kupplungsteils
- L_{R}: Länge des Rohrstücks
- MA: Mittelachse

## Patentansprüche

1. Ausgleichskupplung zum Ausgleich eines Radialversatzes zwischen zwei rotierbaren Elementen, mit zwei mit den rotierbaren Elementen zu verbindenden äußeren Kupplungsteilen (2, 3), nämlich einem antriebsseitigen Kupplungsteil (2) und einem abtriebsseitigen Kupplungsteil (3), sowie mit einem mittleren Kupplungsteil (4), welches gegenüber den äußeren Kupplungsteilen (2, 3) jeweils begrenzt beweglich ist, wobei das mittlere Kupplungsteil (4) aus einem als Dämpfungselement (7) ausgebildeten Rohrstück sowie zwei an dem Rohrstück (7) befestigten, jeweils zum zentrierten Zusammenstecken mittels Kugelkopfzentrierung mit einem der äußeren Kupplungsteile (2, 3) vorgesehenen Rohrabschlussstücken (9, 10) gebildet ist, **dadurch gekennzeichnet, dass** das mittlere Kupplungsteil (4) mittels jeweils eines Kugelkopfes (19) relativ zu den äußeren Kupplungsteilen (2, 3) zentriert ist, und dass entweder
eine drehmomentübertragende Verbindung zwischen einem Kugelkopf (19) und dem damit gekoppelten Kupplungsteil (2, 3, 4) durch einen im Kugelkopf (19) befestigten Stift (23) sowie eine korrespondierende Nut (24) in dem genannten Kupplungsteil (2, 3, 4) hergestellt ist, oder dass
eine drehmomentübertragende Verbindung zwischen einem Kugelkopf (19) und dem damit gekoppelten Kupplungsteil (2, 3, 4) mit Hilfe von Verzahnungen (31, 32) des Kugelkopfes (19) sowie des genannten Kupplungsteils (2, 3, 4) hergestellt ist.

2. Ausgleichskupplung nach Anspruch 1, **dadurch gekennzeichnet, dass** mindestens eine der Verbindungen zwischen Rohrstück (7) und Rohrabschlussstück (9, 10) als Überlastkupplung (17, 18) ausgebildet ist.

3. Ausgleichskupplung nach Anspruch 2, **dadurch gekennzeichnet, dass** beide Verbindungen zwischen Rohrstück (7) und Rohrabschlussstück (9, 10) als Überlastkupplungen (17, 18) ausgebildet sind, wobei deren Belastbarkeit durch einen zwischen das Rohrstück (7) und die Rohrabschlussstücke (17, 18) eingebrachten Klebstoff (15) bestimmt ist.

4. Ausgleichskupplung nach einem der Ansprüche 1 bis 3, **dadurch gekennzeichnet, dass** das Rohrstück (7) einen faserverstärkten Kunststoff umfasst.

5. Ausgleichskupplung nach einem der Ansprüche 1 bis 4, **dadurch gekennzeichnet, dass** die Kugelköpfe (19) Teile der äußeren Kupplungsteile (2, 3) sind.

6. Ausgleichskupplung nach einem der Ansprüche 1 bis 4, **dadurch gekennzeichnet, dass** die Kugelköpfe (19) Teile der Rohrabschlussstücke (17, 18) sind.

7. Ausgleichskupplung nach einem der Ansprüche 1 bis 6, **dadurch gekennzeichnet, dass** an den Kugelkopf (19) ein Verlängerungsabschnitt (21) anschließt, welcher sich unter Zwischenschaltung mindestens eines elastischen Ringes (27, 28) an einer Innenumfangsfläche eines der Kupplungsteile (2, 3, 4) abstützt.

## Claims

1. A compensating coupling for compensating a radial offset between two rotatable elements, said coupling comprising two outer coupling parts (2, 3), specifically an input-side coupling part (2) and an output-side coupling part (3), which are to be connected to rotatable elements, and with a centre coupling part (4), which is movable to a limited extent relative to the outer coupling parts (2, 3), the centre coupling part (4) being composed of a tube piece in the form of a damping element (7), and also two tube end pieces (9, 10), which are fastened to the tube piece (7) and are each provided for centred connection by means of ball head centring with one of the outer coupling parts (2, 3), **characterised in that** the centre coupling part (4) is centred relative to each of the outer coupling parts (2, 3) by means of a ball head (19), and **in that** either
a torque-transmitting connection is established between a ball head (19) and the coupling part (2, 3, 4) coupled thereto by a pin (23) secured in the ball head (19) and also a corresponding groove (24) in said coupling part (2, 3, 4), or **in that**
a torque-transmitting connection is established between a ball head (19) and the coupling part (2, 3, 4) coupled thereto with the aid of toothings (31, 32) of the ball head (19) and also of said coupling part (2, 3, 4).

2. The compensating coupling according to claim 1, **characterised in that** at least one of the connections between tube piece (7) and tube end piece (9, 10) is formed as an overload coupling (17, 18).

3. The compensating coupling according to claim 2, **characterised in that** both connections between tube piece (7) and tube end piece (9, 10) are formed as overload couplings (17, 18), their load-bearing capacity being determined by an adhesive (15) introduced between the tube piece (7) and the tube end pieces (17, 18).

4. The compensating coupling according to one of claims 1 to 3, **characterised in that** the tube piece (7) comprises a fibre-reinforced plastic.

5. The compensating coupling according to one of claims 1 to 4, **characterised in that** the ball heads (19) are parts of the outer coupling parts (2, 3).

6. The compensating coupling according to one of claims 1 to 4, **characterised in that** the ball heads (19) are parts of the tube end pieces (17, 18).

7. The compensating coupling according to one of claims 1 to 6, **characterised in that** an extension portion (21) is connected to the ball head (19), which is supported on an inner circumferential surface of one of the coupling parts (2, 3, 4) by means of the interposition of at least one elastic ring (27, 28).

## Revendications

1. Accouplement de compensation destiné à la compensation d'un décalage radial entre deux éléments rotatifs, comportant deux parties d'accouplement (2, 3) extérieures à relier aux éléments rotatifs, à savoir une partie d'accouplement (2) côté entraînement et une partie d'accouplement (3) côté sortie, et comportant une partie d'accouplement (4) centrale, qui est mobile de manière limitée respectivement par rapport aux parties d'accouplement (2, 3) extérieures, dans lequel la partie d'accouplement (4) centrale est formée d'une pièce tubulaire conçue comme un élément d'amortissement (7) ainsi que de deux pièces d'embout de tube (9, 10), fixées sur la pièce tubulaire (7), prévues respectivement pour l'emboîtement centré au moyen d'un centrage par tête sphérique avec l'une des parties d'accouplement (2, 3) extérieures, **caractérisé en ce que** la partie d'accouplement (4) centrale est centrée au moyen respectivement d'une tête sphérique (19) par rapport aux parties d'accouplement (2, 3) extérieures et **en ce que**
soit une liaison de transmission de couple entre une tête sphérique (19) et la partie d'accouplement (2, 3, 4) qui est accouplée à celle-ci est établie par une tige (23) fixée à la tête sphérique (19) ainsi qu'une rainure (24) correspondante dans ladite partie d'accouplement (2, 3, 4) soit **en ce qu'**
une liaison de transmission de couple entre une tête sphérique (19) et la partie d'accouplement (2, 3, 4) qui est accouplée à celle-ci est établie à l'aide de dentures (31, 32) de la tête sphérique (19) ainsi que de ladite partie d'accouplement (2, 3, 4).

2. Accouplement de compensation selon la revendication 1, **caractérisé en ce qu'**au moins une des liaisons est formée entre la pièce tubulaire (7) et la pièce d'embout de tube (9, 10) sous forme d'accouplement de surcharge (17, 18).

3. Accouplement de compensation selon la revendication 2, **caractérisé en ce que** les deux liaisons entre la pièce tubulaire (7) et la pièce d'embout de tube (9, 10) sont formées sous forme d'accouplements de surcharge (17, 18), dans lequel leur capacité de charge est déterminée par une colle (15) introduite entre la pièce tubulaire (7) et les pièces d'embout de tube (17, 18).

4. Accouplement de compensation selon l'une des revendications 1 à 3, **caractérisé en ce que** la pièce tubulaire (7) comprend un plastique renforcé par des fibres.

5. Accouplement de compensation selon l'une des revendications 1 à 4, **caractérisé en ce que** les têtes sphériques (19) sont des parties des parties d'accouplement (2, 3) extérieures.

6. Accouplement de compensation selon l'une des revendications 1 à 4, **caractérisé en ce que** les têtes sphériques (19) sont des parties des pièces d'embout de tube (17, 18).

7. Accouplement de compensation selon l'une des revendications 1 à 6, **caractérisé en ce qu'**une section de prolongement (21) se raccorde à la tête sphérique (19), laquelle section s'appuie, avec interposition d'au moins un anneau élastique (27, 28) sur une surface circonférentielle interne d'une des parties d'accouplement (2, 3, 4).
